# EUROPEAN PATENT APPLICATION

(11) **EP 3 309 718 A1**
(43) Date of publication of application: **18.04.2018**
(21) Application number: 16193282.7
(22) Date of filing: 11.10.2016
(51) Int. Cl.: G06N 3/04, G06N 99/00, H04L 9/30

(54) **DATA PROCESSING APPARATUS AND METHOD FOR OPERATING A DATA PROCESSING APPARATUS**

(71) Applicant: Atos Nederland B.V., 1185 MC Amstelveen (NL)
(72) Inventor: Kerling, Frederik Cornelis Adriaan, 3438 LE Nieuwegein (NL)
(74) Representative: Patentanwaltskanzlei WILHELM & BECK

(57) **Abstract**

A data processing apparatus comprises a first neural network, a first translation layer, a quantum ring layer, a second translation layer and a second neural network. A quantum ring layer comprises a plurality of quantum processing units connected in a ring topology. The first translation layer is designed for receiving first data from the first neural network and for feeding the first data to the quantum ring layer. The second translation layer is designed for receiving second data from quantum ring layer and for feeding the second data to the second neural network.

## Description

The present invention relates to a data processing apparatus and to a method for operating a data processing apparatus.

Quantum processing units that use quantum-mechanical phenomena for processing information are known in the state of the art. Such quantum processing units comprise quantum bits (qubits) which can be in superpositions of states. Quantum bits can be implemented using atomic ions, superconducting circuits or nitrogen-vacancy centres in diamond for example.

Artificial neural networks are also known in the state of the art and are used to adaptively approximate a desired behaviour by learning.

It is an object of the present invention to provide a data processing apparatus. It is a further object of the present invention to provide a method for operating a data processing apparatus. These objectives are achieved by a data processing apparatus and by a method for operating a data processing apparatus according to the independent claims. Preferred embodiments are disclosed in the dependent claims.

A data processing apparatus comprises a first neural network, a first translation layer, a quantum ring layer, a second translation layer and a second neural network. The quantum ring layer comprises a plurality of quantum processing units connected in a ring topology. The first translation layer is designed for receiving first data from the first neural network and for feeding the first data to the quantum ring layer. The second translation layer is designed for receiving second data from the quantum ring layer and for feeding the second data to the second neural network.

The quantum ring layer of this data processing apparatus comprises a plurality of quantum processing units which strongly increases the computational capacity of this data processing apparatus compared to an apparatus comprising only one quantum processing unit. The increased computational capacity of this data processing apparatus advantageously allows for solving complex computational problems. The arrangement of the quantum processing units of the quantum ring layer in a ring topology ensures that during operation of the data processing apparatus a plurality of quantum processing units is involved in the computation. This ensures that the increased computational capacity of the data processing apparatus is used.

The first neural network and the second neural network of this data processing apparatus are provided for deploying the quantum ring layer of this data processing apparatus. The adaptivity of the first neural network and the second neural network allows to deploy the quantum ring layer of this data processing apparatus independently of the precise implementation of the quantum processing units of the quantum ring layer. This advantageously makes it possible to build this data processing apparatus with different kinds of quantum processing units, allowing to reduce development time and cost. The learning capabilities of the first neural network and the second neural network allow the first neural network and the second neural network to find and use efficient algorithms for deploying the quantum ring layer despite the complexity of the ring topology of the quantum ring layer.

The ring topology of the quantum ring layer and the capability of the neural networks to operate not strictly binary advantageously ensure that the neural networks of this data processing apparatus can find an optimized use of the quantum ring layer of quantum processing units.

The first neural network and the second neural network may be virtualized in software, advantageously allowing for easy maintenance of the data processing apparatus.

In an embodiment of the data processing apparatus, the data processing apparatus comprises an input layer for feeding data into the first neural network. Advantageously, the input layer of the data processing apparatus allows for a simple use of the data processing apparatus. The input layer may for example allow a human user of the data processing apparatus to enter data to be processed by the data processing apparatus.

In an embodiment of the data processing apparatus, the data processing apparatus comprises an output layer for receiving data from the second neural network. Advantageously, the output layer of the data processing apparatus allows for a simple use of the data processing apparatus. The output layer may for example be provided for displaying data processed by the data processing apparatus to a human user of the data processing apparatus or for passing data processed by the data processing apparatus on to a further apparatus for further processing.

In an embodiment of the data processing apparatus, the first translation layer is designed for applying control signals to the quantum ring layer. The first translation layer may for example be designed for applying optical signals, electric signals, for example electric pulses, electric fields, magnetic fields or other kinds of control signals. Advantageously, this allows the first translation layer to feed first data provided by the first neural network to the quantum ring layer of the data processing apparatus.

In an embodiment of the data processing apparatus, the second translation layer is designed for making a measurement of a quantity of the quantum ring layer. The second translation layer may also be designed for making measurements of a plurality of quantities of the quantum ring layer. Advantageously, this allows the second translation layer of the data processing apparatus to receive second data from the quantum ring layer and for feeding this second data to the second neural network of the data processing apparatus.

In an embodiment of the data processing apparatus, the first translation layer is designed such that data cannot pass directly from the quantum ring layer to the first neural network. Advantageously, this ensures a structure of the first neural network that is guaranteed to make use of the quantum ring layer of the data processing apparatus.

In an embodiment of the data processing apparatus, the second translation layer is designed such that data cannot pass directly from the second neural network to the quantum ring layer. Advantageously, this ensures that the second neural network receives data that has been processed by the quantum ring layer at the instigation of the first neural network. This results in a structure of the data processing apparatus which effectively makes use of the quantum ring layer to process data.

In an embodiment of the data processing apparatus, the quantum ring layer comprises at least three quantum processing units, preferably at least five quantum processing units. Advantageously, this allows the data processing apparatus to apply algorithms with an increased complexity, making advantage of the increased computational capacity of the plurality of quantum processing units of the quantum ring layer.

In an embodiment of the data processing apparatus, the quantum ring layer allows to bring at least two quantum processing units into an entangled state. Advantageously, this increases the computational capacity of the quantum ring layer of this data processing apparatus and allows the quantum processing units to apply quantum-mechanical phenomena for computation.

In an embodiment of the data processing apparatus, the quantum ring layer allows to bring all quantum processing units into an entangled state. Advantageously, this may create a computational capacity of the quantum ring layer which is higher than the sum of the computational capacities of the single quantum processing units of the quantum ring layer.

In an embodiment of the data processing apparatus, each quantum processing unit comprises a plurality of quantum bits. Each quantum bit is designed for assuming a quantum superposition of at least two states. Advantageously, this allows the quantum processing units of the quantum ring layer of this data processing apparatus to apply quantum-mechanical phenomena for computation.

In an embodiment of the data processing apparatus, at least two quantum bits of each quantum processing unit are designed for assuming an entangled state. Advantageously, this increases the computational capacity of the quantum processing units of the quantum ring layer of this data processing apparatus.

A method for operating a data processing apparatus that is designed as defined above comprises steps for receiving first data from the first neural network, for feeding the first data to the quantum ring layer, for receiving second data from the quantum ring layer and for feeding the second data to the second neural network.

Advantageously, this method allows for processing data using quantum-mechanical phenomena. The method allows for applying complex algorithms using the full computational capacity of the quantum ring layer of the data processing apparatus.

In an embodiment of the method, feeding the first data to the quantum ring layer comprises applying control signals to the quantum ring layer in dependence of the first data. Advantageously, this allows to pass first data from the first neural network to the quantum ring layer of the data processing apparatus.

In an embodiment of the method, receiving second data from the quantum ring layer comprises making a measurement of a quantity of the quantum ring layer. Advantageously, this allows the passing of data from the quantum ring layer to the second neural network of the data processing apparatus.

In an embodiment of the method, receiving second data from the quantum ring layer is initiated by the first neural network. Advantageously, this ensures that no information can pass directly from the second neural network to the quantum ring layer. This advantageously ensures that the method for operating the data processing apparatus makes use of the quantum ring layer of the data processing apparatus for data processing.

In an embodiment of the method, the first data fed to the quantum ring layer is processed by at least two quantum processing units of the quantum ring layer before second data is received from the quantum ring layer. Advantageously, this ensures that the method for operating the data processing apparatus makes use of the increased computational capacity of the quantum ring layer compared to a single quantum processing unit.

In an embodiment of the method, the data processing apparatus comprises an input layer for feeding data into the first neural network and an output layer for receiving data from the second neural network. The method comprises additional steps for feeding data to the first neural network via the input layer and for receiving data from the second neural network via the output layer. Advantageously, this method allows for a simple use of the data processing apparatus. The input layer and the output layer may for example be used for interfacing with a human user of the data processing apparatus or for interfacing with further data processing apparatuses.

In an embodiment of the method, the method comprises steps for teaching the first neural network and the second neural network. Advantageously, teaching the first neural network and the second neural network to operate the quantum ring layer of the data processing apparatus simplifies the development of suitable algorithms for using the quantum ring layer of the data processing apparatus. Teaching the first neural network and the second neural network allows the first neural network and the second neural network to find suitable solutions to computational problems by themselves without requiring programming by a human developer. Furthermore, teaching the first neural network and the second neural network allows the neural network and the second neural network to adapt to quantum ring layers comprising different kinds of quantum processing units. This may reduce the development time and development costs necessary for developing the data processing apparatus and the method for operating the data processing apparatus.

In an embodiment of the method, the method comprises steps for teaching the second neural network independently. This means that the second neural network is teached independently of the first neural network. Advantageously, this simplifies the teaching of the first neural network and the second neural network.

The above-described properties, features and advantages of this invention as well as the way in which they are achieved, will become more clearly and comprehensively understandable in connection with the following description of the exemplary embodiments, which will be explained in more detail in connection with the drawings in which, in schematic representation in each case:
- Fig. 1: shows a data processing apparatus; and
- Fig. 2: shows a quantum ring layer of the data processing apparatus.

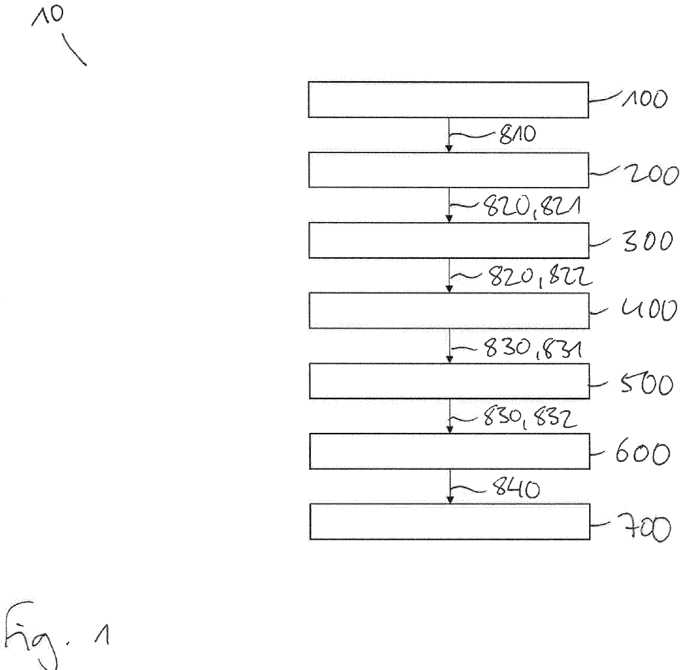

Fig. 1 shows a schematic view of a data processing apparatus 10. The data processing apparatus 10 is designed for processing data. The data processing apparatus 10 is designed for being adapted to a specific data processing task and is capable of performing this specific data processing task with high efficiency. The data processing apparatus 10 may be adapted to factor large integer numbers, for example.

The data processing apparatus 10 comprises an input layer 100, a first neural network 200, a first translation layer 300, a quantum ring layer 400, a second translation layer 500, a second neural network 600 and an output layer 700. The input layer 100, the first neural network 200, the first translation layer 300, the quantum ring layer 400, the second translation layer 500, the second neural network 600 and the output layer 700 are arranged in a serial configuration one after another. The input layer 100, the first neural network 200, the first translation layer 300, the quantum ring layer 400, the second translation layer 500, the second neural network 600 and the output layer 700 may also be regarded as layers which are stacked on top of each other. The first neural network 200 is arranged after or below the input layer 100. The first translation layer 300 is arranged after or below the first neural network 200. The quantum ring layer 400 is arranged after or below the first translation layer 300. The second translation layer 500 is arranged after or below the quantum ring layer 400. The second neural network 600 is arranged after or below the second translation layer 500. The output layer 700 is arranged after or below the second neural network 600.

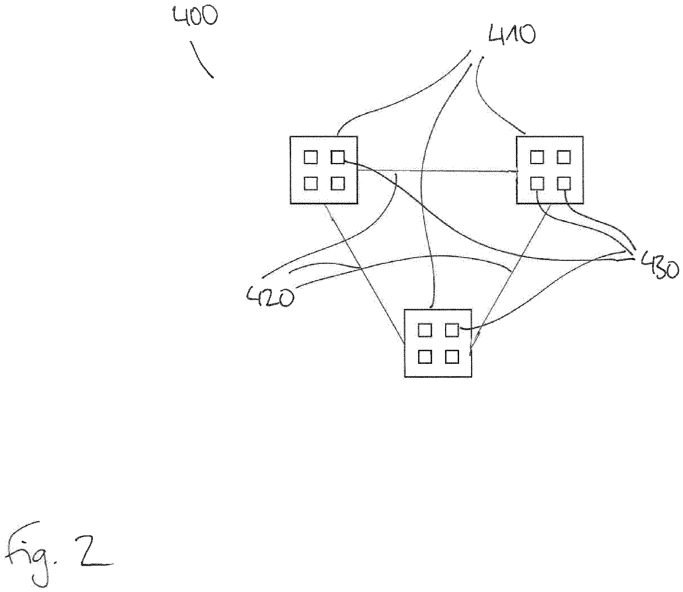

Fig. 2 shows a schematic depiction of the quantum ring layer 400. The quantum ring layer 400 comprises a plurality of quantum processing units 410 connected in a ring topology 420. In the example of Fig. 2, the quantum ring layer 400 comprises three quantum processing units 410. It may be practical to provide the quantum ring layer 400 with more than three quantum processing units 410, for example with five or more quantum processing units 410. It may be advisable to not provide fewer than three quantum processing units 410.

The combination of a plurality of quantum processing units 410 arranged in the ring topology 420 of the quantum ring layer 400 increases the computational capacity of the quantum ring layer 400 compared to only one quantum processing unit 410.

The quantum processing units 410 of the quantum ring layer 400 are arranged in a ring topology 420. The quantum processing units 410 are thus arranged in a closed ring structure such that each quantum processing unit 410 is connected to a preceding other quantum processing unit 410 and to a subsequent other quantum processing unit 410. Information can flow from the respective preceding quantum processing unit 410 to the respective quantum processing unit 410 and from the respective quantum processing unit 410 to the respective subsequent quantum processing unit 410.

Each quantum processing unit 410 comprises a plurality of quantum bits 430. The quantum bits 430 may also be referred to as qubits. Each quantum bit 430 is designed for assuming a quantum superposition of at least two states. The quantum bits 430 may for example be implemented using nitrogen-vacancy (NV) centres in a diamond lattice of carbon atoms, superconducting circuits, atomic ions or other quantum mechanical multi-level systems.

The quantum processing units 410 of the quantum ring layer 400 may each be capable of bringing two or more quantum bits 430 of the respective quantum processing unit 410 into a state of quantum-mechanical entanglement. This may allow the respective quantum processing unit 410 to simultaneously act on two or more of its quantum bits 430.

The quantum ring layer 400 may allow to bring two or more of the quantum processing units 410 into a state of quantum-mechanical entanglement. The quantum ring layer 400 may even allow to bring all quantum processing units 410 into an entangled state. This may allow the quantum processing unit 410 of the quantum ring layer 400 to influence and effect each other, allowing for a parallel processing of data.

The first neural network 200 and the second neural network 600 of the data processing apparatus 10 are provided for operating the quantum ring layer 400. The first neural network 200 and the second neural network 600 are adaptive and capable of learning how to effectively make use of the computational capacity of the quantum ring layer 400 of the data processing apparatus 10. This allows the data processing apparatus 10 to adapt itself to a specific data processing task without having to explicitly provide an algorithm that solves the specific task using the quantum ring layer 400.

The first neural network 200 and the second neural network 600 may be implemented in hardware or at least partially in software.

The first translation layer 300 and the second translation layer 500 serve as interfaces between the neural networks 200, 600 and the quantum ring layer 400. The first translation layer 300 is designed for receiving first data 820 from the first neural network 200 and for feeding the first data 820 to the quantum ring layer 400. The second translation layer 500 is designed for receiving second data 830 from the quantum ring layer 400 and for feeding the second data 830 to the second neural network 600.

The first translation layer 300 receives the first data 820 as untranslated first data 820, 821 from the first neural network 200 in a data format used by the first neural network 200. The untranslated first data 820, 821 may for example be numerical data in digital or analogue form. The first translation layer 300 translates the untranslated first data 820, 821 into translated first data 820, 822, which the first translation layer 300 feeds to the quantum ring layer 400.

The translated first data 820, 822 is provided to the quantum ring layer 400 by applying suitable control signals to the quantum ring layer 400. These control signals are applied to the quantum ring layer 400 in dependence of the first data 820. The control signals may for example comprise optical signals, for example laser pulses, electric signals, for example voltage pulses, electric fields and/or magnetic fields or other types of control signals.

The first translation layer 300 is designed such that data cannot pass directly from the quantum ring layer 400 to the first neural network 200. Consequently, data and information can only flow from the first neural network 200 to the quantum ring layer 400. This forces the first neural network 200 to structure itself in a way that allows longer algorithms to be force-fed through the quantum ring layer 400.

The second translation layer 500 receives second data 830 from the quantum ring layer 400 as untranslated second data 830, 831. The second translation layer 500 translates the second data 830 received from the quantum ring layer 400 into translated second data 830, 832 in a format that can be understood by the second neural network 600 and that can be provided to the second neural network 600. The translated second data 830, 832 may for example comprise numerical data in digital or analogue form.

Receiving the untranslated second data 830, 831 from the quantum ring layer 400 comprises making a measurement of a quantity of the quantum ring layer 400. Receiving the untranslated second data 830, 831 may also comprise making more than one measurement of one or more quantities of the quantum ring layer 400.

The second translation layer 500 is designed such that data and information cannot pass directly from the second neural network 600 to the quantum ring layer 400. To prevent a flow of information and data from the second neural network 600 to the quantum ring layer 400, receiving untranslated second data 830, 831 from the quantum ring layer 400 by the second translation layer 500 may be initiated by the first neural network 200. In this case, the first neural network 200 initiates one or more measurements of one or more quantities of the quantum ring layer 400. The results of these measurements are received by the second translation layer 500 as untranslated second data 830, 831. The results of these measurements are not passed to the first neural network 200 to prevent that data and information passes from the quantum ring layer 400 to the first neural network 200.

The first translation layer 300 and the second translation layer 500 are designed and connected to the quantum ring layer 400 such that first data 820 fed to the quantum ring layer 400 through the first translation layer 400 is processed by at least two of the quantum processing units 410 of the quantum ring layer 400 before second data 830 is received from the quantum ring layer 400 via the second translation layer 500. This ensures that the data processing apparatus 10 always uses more than one of the quantum processing units 410 of the quantum ring layer 400 for processing data.

The use of more than one quantum processing unit 410 may for example be achieved by connecting the first translation layer 300 to other quantum processing units 410 of the quantum ring layer 400 than the second translation layer 500. The first translation layer 300 and the second translation layer 500 may for example each be connected to disjunct sets of quantum processing units 410, each set of quantum processing units 410 comprising about half of the quantum processing units 410, for example.

The input layer 100 of the data processing apparatus 10 is designed for feeding input data 810 to the first neural network 200. The input data 810 may be provided by a human user of the data processing apparatus 10, for example, or by a conventional computer. The input data 810 comprises data that should be processed by the data processing apparatus 10.

The output layer 700 is provided for receiving output data 840 from the second neural network 600. The output data 840 comprises results that have been obtained by the data processing apparatus 10 as a result of processing the provided input data 810. The output data 840 may be presented to a human user of the data processing apparatus 10 in human-readable form, for example, or be passed to a conventional computer.

The first neural network 200 and the second neural network 600 of the data processing apparatus 10 have to undergo learning before the data processing apparatus 10 can successfully process data in a desired way. In the learning procedure, the first neural network 200 and the second neural network 600 will learn to use the quantum ring layer 400 of the data processing apparatus 10 to process data in a desired way. The data processing performed by the data processing apparatus 10 can potentially be more efficient compared to processing the data using a conventional computer through the use of the quantum ring layer 400.

After the learning procedure of the first neural network 200 and the second neural network 600, the data processing apparatus 10 is specialized to perform one certain kind of data processing, which it has been trained for. The data processing apparatus 10 is thus not a multi-purpose computer but a special-purpose data processing apparatus adapted to one particular task. For example, the data processing apparatus 10 may be specialized to factorize large integer numbers.

The specialization and adaptation of the data processing apparatus 10 to the desired data processing is achieved through the learning of the first neural network 200 and the second neural network 600 and does neither require developing an algorithm for using the quantum ring layer 400 nor any explicit programming of the quantum ring layer 400.

The learning of the first neural network 200 and the second neural network 600 happens sequentially. The first neural network 200 and the second neural network 600 learn independently but by relatable parameters. The second neural network 600 learns on the basis of the translated second data 830, 832 which is fed to the second neural network 600 by the second translation layer 500. This creates a re-enforcement, which is used by the second neural network 600 to adapt itself. The same reinforcement may also be used by the first neural network 200 to adapt itself. To this end, a feedback may be provided from the second translation layer 500 to the input layer 100 or to the first neural network 200 at least during the learning phase of the first neural network 200 and the second neural network 600.

The first neural network 200 learns to assign reasonable tasks to the quantum ring layer 400 by feeding suitable first data 820 to the quantum ring layer 400. The second neural network 600 learns to interpret the second data 830 obtained from the quantum ring layer 400 correctly.

It is possible to teach the first neural network 200 and the second neural network 600 incrementally based on increasingly complex milestones. This way, the first neural network 200 and the second neural network 600 can first learn to interact with the practical hardware implementation of the quantum ring layer 400, then learn to use the quantum ring layer 400 to solve simple tasks and then learn to use the quantum ring layer 400 to solve increasingly complex tasks.

Teaching the first neural network 200 and the second neural network 600 may comprise the following milestones, for example:
The second neural network 600 may first learn to transform pre-determined single read-out second data 830 obtained via the second translation layer 500.

Afterwards, the second neural network 600 may learn to average over multiple read-outs of second data 830.

Then the second translation layer 500 may learn to retain but not use second data 830 in one iteration.

Next, the second neural network 600 may learn to document and remove information between consecutive iterations.

The first neural network 200 may learn as one milestone to initiate a measurement of a quantity of the quantum ring layer 400 to allow the second translation layer 500 to receive second data 830 from the quantum ring layer 400.

In further teaching milestones, the first neural network 200 may learn to feed first data 820, 822 to individual quantum processing units 410 of the quantum ring layer 400 via the first translation layer 300.

Afterwards, the first neural network 200 may learn to simultaneously pass first data 820, 822 to more than one quantum processing unit 410 of the quantum ring layer 400 via the first translation layer 300.

Next, the neural network 200 may learn to pass first data 820, 822 to the quantum processing unit 410 of the quantum ring layer 400 such that basic operations of single quantum processing units 410 are performed.

The first neural network 200 may also learn to feed first data 820, 822 to the quantum ring layer 400 such that two or more quantum processing units 410 are entangled.

Next, the first neural network 200 may learn to perform operations involving at least two quantum processing units 410 of the quantum ring layer 400 by passing first data 820, 822 to the quantum ring layer 400.

After these learning milestones are achieved, the first neural network 200 and the second neural network 600 of the data processing apparatus 10 will be capable of using the quantum ring layer 400. In a following learning phase, the first neural network 200 and the second neural network 600 will learn to use this capability to solve a specific data processing task.

The invention has been illustrated and described in detail with the eight of the preferred exemplary embodiments. The invention is nevertheless not restricted to the examples disclosed. Rather, other variants may be derived therefrom by the person skilled in the art, without departing from the protective scope of the invention.

### Reference List

- 10: data processing apparatus
- 100: input layer
- 200: first neural network
- 300: first translation layer
- 400: quantum ring layer
- 410: quantum processing units
- 420: ring topology
- 430: quantum bit
- 500: second translation layer
- 600: second neural network
- 700: output layer
- 810: input data
- 820: first data
- 821: untranslated first data
- 822: translated first data
- 830: second data
- 831: untranslated second data
- 832: translated second data
- 840: output data

## Claims

1. A data processing apparatus (10) comprising
a first neural network (200),
a first translation layer (300),
a quantum ring layer (400),
a second translation layer (500),
and a second neural network (600),
wherein the quantum ring layer (400) comprises a plurality of quantum processing units (410) connected in a ring topology (420),
wherein the first translation layer (300) is designed for receiving first data (820, 821) from the first neural network (200) and for feeding the first data (820, 822) to the quantum ring layer (400),
wherein the second translation layer (500) is designed for receiving second data (830, 831) from the quantum ring layer (400) and for feeding the second data (830, 832) to the second neural network (600).

2. The data processing apparatus (10) according to claim 1,
wherein the data processing apparatus (10) comprises an input layer (100) for feeding data (810) to the first neural network (200).

3. The data processing apparatus (10) according to one of the previous claims,
wherein the data processing apparatus (10) comprises an output layer (700) for receiving data (840) from the second neural network (600).

4. The data processing apparatus (10) according to one of the previous claims,
wherein the first translation layer (300) is designed for applying control signals to the quantum ring layer (400).

5. The data processing apparatus (10) according to one of the previous claims,
wherein the second translation layer (500) is designed for making a measurement of a quantity of the quantum ring layer (400).

6. The data processing apparatus (10) according to one of the previous claims,
wherein the first translation layer (300) is designed such that data cannot pass directly from the quantum ring layer (400) to the first neural network (200).

7. The data processing apparatus (10) according to one of the previous claims,
wherein the second translation layer (500) is designed such that data cannot pass directly from the second neural network (600) to the quantum ring layer (400).

8. The data processing apparatus (10) according to one of the previous claims,
wherein the quantum ring layer (400) comprises at least three quantum processing units (410), preferably at least five quantum processing units (410).

9. The data processing apparatus (10) according to one of the previous claims,
wherein the quantum ring layer (400) allows to bring at least two quantum processing units (410) into an entangled state.

10. The data processing apparatus (10) according to claim 9,
wherein the quantum ring layer (400) allows to bring all quantum processing units (410) into an entangled state.

11. The data processing apparatus (10) according to one of the previous claims,
wherein each quantum processing unit (410) comprises a plurality of quantum bits (430),
wherein each quantum bit (430) is designed for assuming a quantum superposition of at least two states.

12. The data processing apparatus (10) according to claim 11,
wherein at least two quantum bits (430) of each quantum processing unit (410) are designed for assuming an entangled state.

13. A method for operating a data processing apparatus (10)
wherein the data processing apparatus (10) is designed as claimed in claim 1,
the method comprising the following steps:
- receiving first data (820, 821) from the first neural network (200);
- feeding the first data (820, 822) to the quantum ring layer (400);
- receiving second data (830, 831) from the quantum ring layer (400);
- feeding the second data (830, 832) to the second neural network (600).

14. The method according to claim 13,
wherein feeding the first data (820, 822) to the quantum ring layer (400) comprises applying control signals to the quantum ring layer (400) in dependence of the first data (820, 821).

15. The method according to one of claims 13 and 14, wherein receiving second data (830) from the quantum ring layer (400) comprises making a measurement of a quantity of the quantum ring layer (400).

16. The method according to one of claims 13 to 15, wherein receiving second data (830) from the quantum ring layer (400) is initiated by the first neural network (200).

17. The method according to one of claims 13 to 16, wherein first data (820) fed to the quantum ring layer (400) is processed by at least two quantum processing units (410) of the quantum ring layer (400) before second data (830) is received from the quantum ring layer (400).

18. The method according to one of claims 13 to 17, wherein the data processing apparatus (10) is designed as claimed in claim 2 and 4,
wherein the method comprises the following additional steps:
- feeding data (810) to the first neural network (200) via the input layer (100);
- receiving data (840) from the second neural network (600) via the output layer (700).

19. The method according to one of claims 13 to 18, wherein the method comprises steps for teaching the first neural network (200) and the second neural network (600).

20. The method according to claim 19,
wherein the method comprises steps for teaching the second neural network (600) independently.
